(19) Europäisches Patentamt
European Patent Office
Office européen des brevets

(11) **EP 3 760 989 B1**

## (12) EUROPEAN PATENT SPECIFICATION

(45) Date of publication and mention
of the grant of the patent:
**20.12.2023 Bulletin 2023/51**

(21) Application number: **19183861.4**

(22) Date of filing: **02.07.2019**

(51) International Patent Classification (IPC):
*G01J 3/02* *(2006.01)*   *G01J 3/26* *(2006.01)*
*G01J 3/28* *(2006.01)*   *G01J 3/32* *(2006.01)*

(52) Cooperative Patent Classification (CPC):
**G01J 3/0208; G01J 3/021; G01J 3/0218;**
**G01J 3/0224; G01J 3/0256; G01J 3/26;**
**G01J 3/2823; G01J 3/32;** G01J 2003/2826

(54) **ELECTRO-OPTICAL 2D IMAGING SPECTROMETER**

ELEKTRO-OPTISCHES 2D-BILDGEBUNGSSPEKTROMETER

SPECTROMÈTRE D'IMAGERIE 2D ÉLECTRO-OPTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**06.01.2021 Bulletin 2021/01**

(73) Proprietor: **Airbus Defence and Space GmbH**
**82024 Taufkirchen (DE)**

(72) Inventor: **Dr. Köhler, Jess**
**82024 Taufkirchen (DE)**

(74) Representative: **Frenkel, Matthias Alexander**
**Wuesthoff & Wuesthoff**
**Patentanwälte PartG mbB**
**Schweigerstraße 2**
**81541 München (DE)**

(56) References cited:
JP-A- S56 112 635      US-A1- 2006 221 346
US-A1- 2013 038 877      US-A1- 2014 354 999

- **KAN LIU ET AL: "<title>Smart hyperspectral imaging detection based on electrically tunable liquid-crystal Fabry-Perot microstructure array</title>", BIOMEDICAL PHOTONICS AND OPTOELECTRONIC IMAGING : 8 - 10 NOVEMBER 2000, BEIJING, CHINA, vol. 7457, 12 August 2009 (2009-08-12), page 74570U, XP055252056, Bellingham, Wash., US DOI: 10.1117/12.825575 ISBN: 978-1-62841-832-3**
- **CHRISTENSEN K A ET AL: "RAMAN IMAGING USING A TUNABLE DUAL-STAGE LIQUID CRYSTAL FABRY- PEROT INTERFEROMETER", APPLIED SPECTROSCOPY, THE SOCIETY FOR APPLIED SPECTROSCOPY. BALTIMORE, US, vol. 49, no. 8, 1 August 1995 (1995-08-01) , pages 1120-1125, XP000523732, ISSN: 0003-7028, DOI: 10.1366/0003702953965155**

**Description**

Examples relate to optical systems for two-dimensional (2D) imaging spectrometers and applications thereof and in particular to a light transmission path for an imaging spectrometer.

Current imaging spectrometers (including dispersers) provide at certain observation time spectral information for one dimensional (1D) image of an object to be observed. Further, these imaging spectrometers (for space applications) contain expensive optics with time consuming manufacturing, alignment and integration steps. Moreover, these imaging spectrometers contain a spectrometer slit. Thus, they are sensitive to the input irradiance variation within the spectrometer slit. Special elements called homogenizers are used in order to minimize this effect. In addition, these imaging spectrometers have conventional optical elements which include cross-talk/straylight between different spatial intensity samples in the resulting image.

Prior art is known from Kan Liu ET AL: "Smart Hyperspectral Imaging Detection based on Elekctrically Tunable Liquid-Crystal Fabry-Perot Microstructure Array", XP055252056, Christensen K A ET AL: "RAMAN IMAGING USING A TUNABLE DUAL-STAGE LIQUID CRYSTAL FABRY-PEROT INTERFEROMETER", XP000523732, US 2013/038877 A1, US 2014/354999 A1, JP S56 112635 A and US 2006/221346 A1.

Imaging spectrometers may have to be optimized with respect to cost. Nevertheless, it is desired to form imaging spectrometers with reduced manufacturing time.

There may be a demand to provide concepts for imaging spectrometers with reduced cost and manufacturing time.

Such a demand may be satisfied by the subject-matter of the claims.

According to a first aspect, a light transmission path for a spectrometer, as defined in claim 1, is provided. The light transmission path comprises a first liquid crystal Fabry-Pérot filter element. The first liquid crystal Fabry-Pérot filter element has a first bandpass filter characteristic for light being polarized in a predetermined direction. The first bandpass filter characteristic is based on a first voltage applied at the first liquid crystal Fabry-Pérot filter element. The light transmission path comprises a second liquid crystal Fabry-Pérot filter element. The second liquid crystal Fabry-Pérot filter element has a second bandpass filter characteristic for light being polarized in the predetermined direction. The second bandpass filter characteristic is based on a second voltage applied at the second liquid crystal Fabry-Pérot filter element. The first and second liquid crystal Fabry-Pérot filter elements are interconnected and configured to shift the first and second bandpass filter characteristics to each other to form a common bandpass filter characteristic of the light transmission path according to a difference between the first and second voltages.

Such a transmission path may by easily manufactured and cost effective. Consequently, such a transmission path may provide for an enhanced spectrometer. Special homogenizers may also be omitted.

The term "polarized light" may be understood herein as light having a predetermined polarization direction. The transmission path may be formed (in rotation and length) such that the polarization direction of the polarized light (which is input on the one end of the transmission path and output on the other end of the transmission path) does not vary along the transmission path. The transmission path may thus be straight.

The feature "liquid crystal Fabry-Pérot filter element" may be a tunable liquid crystal Fabry-Pérot (LCFP) filter element. In particular, the first and second liquid crystal Fabry-Pérot filter elements may respectively comprise an etalon cavity with (nematic) liquid crystal. A refraction index of the liquid crystal inside the cavity may vary corresponding to the first/second voltage applied at the respective liquid crystal Fabry-Pérot filter element. In consequence, the frequency response characteristic may change. A combination of two LCFP filter elements may result in a combined bandpass LCFP filter able to bandpass filter light signals having a polarization direction in a direction of an electrical field induced by the respective first/second voltage.

The bandpass filter characteristic may be a frequency response characteristic, which only allows signals within a specific frequency range to pass the respective liquid crystal Fabry-Pérot filter element.

The first and second liquid crystal Fabry-Pérot filter elements may be arranged successively along the light transmission path.

The first and second voltages may be applied at the respective first and second liquid crystal Fabry-Pérot filter elements such that an electrical field is provided in a direction of the predetermined polarization direction inside a liquid crystal of the respective first and second liquid crystal Fabry-Pérot filter elements.

When a difference between the first and second voltages is varied according to a sampling rate, the first and second liquid crystal Fabry-Pérot filter elements may be configured to shift the common bandpass filter characteristic of the light transmission path along a frequency range based on the sampling rate to bandpass filter the polarized light corresponding to respective frequencies of the frequency range. Thus, a whole spectrum of sampling frequencies can be sampled over a sampling interval.

The light path may be transmissive for one linear polarization direction. The light path may also be non-transmissive for the linear polarization direction orthogonal to it. In particular, the direction of the linear polarization direction for which the light path is transmissive can be adjusted. For example, the first and second liquid crystal Fabry-Pérot filter elements may be configured to absorb the light that passes the plurality of light transmission paths with a polarization direction orthogonal to the direction of index of refraction change in the first and second liquid crystal Fabry-Pérot filter elements (due to non-resonance).

The light transmission path further comprises an optical fiber. The optical fiber is adapted for connecting the first and second liquid crystal Fabry-Pérot filter elements. Thus, the optical fiber is placed between the first and second liquid crystal Fabry-Pérot filter elements.

For example, the light transmission path may comprise further optical transmission lines, for example in the form of optical fibers. The optical fibers and the first and second liquid crystal Fabry-Perot filter elements may be arranged in an alternating manner.

Each of the first and second liquid crystal Fabry-Perot filter elements may have respective connecting pins for applying the first and second voltages, respectively. Due to an arrangement of connecting pins, the polarization direction of light to be transmitted through the light transmission path may be predetermined.

Electrical fields induced by the first and second voltages may have a same direction corresponding to a direction of the polarized light. The respective electrical fields may change a refractive index of the liquid crystal inside the respective liquid crystal Fabry-Pérot filter element.

Each of the first and second liquid crystal Fabry-Pérot filter elements comprises a first plane end surface and a second plane end surface of the connected respective optical fibers. The first plane end surface and the second plane end surface are arranged parallel to each other adapted to only transmit the polarized light.

Each end of the respective optical fibers which ends at one of the first and second liquid crystal Fabry-Pérot filter elements may be partially reflecting, for example a coated polished end. The ends may be high reflecting coated plane surfaces.

Due to the optical fiber, the transmission path may provide for homogenizing the input irradiance variation due to negligence of a spectrometer slit.

A bias voltage of each of the first and second voltages may be in a range between 5 and 8 Volt (for example around 7 Volt). The bias voltage of each of the first and second voltages may be a medium/median voltage of each of the first and second voltages. The bias voltage may be set such that a starting frequency may be set for a starting point of the sampling interval inside the frequency range to be detected.

The difference between the first and second voltages may vary between 1mV (0,001 Volt) to 10mV. The difference may be adjusted for every sample, for example decreased or increased depending on a starting position of the common bandpass filter response.

The difference between the first and second voltages may be varied by varying the first voltage and/or the second voltage.

The sampling rate may be smaller than 200 milliseconds (or 150 milliseconds or 100milliseconds).

The frequency range may include a visible (light) spectrum. For example the visible light spectrum may be in a range of 430 THz to 770 THz. This may correspond to a wavelength range of 380 nanometers to 740 nanometers.

According to a second aspect, ,as defined in claim 12, a plurality of light transmission paths is provided. Each of the plurality of light transmission paths is a light transmission path according to the first aspect.

The plurality of light transmission paths may be in the form of fibre bundles. Such a bundle for the spectrometers may replace a conventional spectrometer slit.

Further, the physical separation of spatial information by using a plurality of fibers in a fiber bundle may exclude cross-talk. Thus, very faint and bright details may be imaged simultaneously.

According to a third aspect, as defined in claim 13, a (imaging) spectrometer for two-dimensional, 2D, imaging of a scene is provided. The spectrometer comprises a telescope. The telescope has an image plane. The telescope is configured to image a scene onto an image plane by focusing light received from the scene in a direction of the image plane. The spectrometer further comprises a polarizing device. The polarizing device is arranged between the telescope and the image plane. The polarizing device is configured to polarize the light. The spectrometer further comprises a plurality of light transmission paths according to the second aspect. The plurality of light transmission paths is arranged such that a respective first end of each of the plurality of light transmission paths ends at the image plane. The spectrometer comprises a detection device. The detection device is arranged downstream of the plurality of light transmission paths. The detection device is arranged such that a respective second end of each of the plurality of light transmission paths ends at the detection device. The detection device is configured to measure respective intensities of the bandpass filtered polarized light according to the sampling rate to derive a 2D image of the scene.

The spectrometer, also called electro-optical 2D imaging spectrometer, may provide a 2D image with its spectral information (not only a 1D image). For example, the electro-optical 2D imaging spectrometer does not include conventional optics. In consequence, manufacturing may be less time consuming. Further, alignment and integration steps of the conventional optics may be omitted.

The polarizing device may be a polarizer adapted to polarize the light passed through the telescope.

In an alternative, the polarizing device may be a beam splitter. The beam splitter may be adapted to split the light from the telescope into different directions. The different directions may be in a direction of the image plane and in a direction of another image plane. The beam splitter may be adapted to polarize the light in two directions perpendicular to each other. For that, the spectrometer may further comprise another plurality of light transmission paths according to the second aspect. The other plurality of light transmission paths may be arranged such that a respective first end of each of the other plurality of light transmission paths ends at the other image plane. The spectrometer may further comprise another detection device. The other detection device may be arranged downstream of the other plurality of light transmission paths. The other detection device may be arranged such that a respective second end of each of the other plurality of light transmission paths ends at the other detection device. The other detection device may be configured to measure respective intensities of the bandpass filtered polarized light according to the sampling rate to derive a 2D image of the scene.

The spectrometer may also be understood as imaging spectrometer herein.

A polarization direction of the polarized light may be predetermined by the polarizing device.

The spectrometer may further comprise a power supply unit. The power supply unit may be configured to engage with the first and second liquid crystal Fabry-Pérot filter elements of each of the plurality of light transmission paths. The power supply unit may be configured to supply the first and second voltages.

The spectrometer may further comprise a static spectral line filter element. The static spectral line filter element may be configured to absorb the light that passes the plurality of light transmission paths with a polarization direction orthogonal to the direction of index of refraction change in the liquid crystal Fabry-Pérot filter elements. These may be the respective first and second liquid crystal Fabry-Pérot filter elements of each of the plurality of light transmission paths.

At least one or more of the following advantages may be provided by the aspects described herein:

- 2D imaging spectrometer;
- Spectrometer without optical mirrors/lenses, lower cost, smaller, more flexible;
- no cross-talk/straylight between spatially separated channels;
- the spatial scene light at each fibre entrance is homogenized within the fibres;
- only low voltage needs to be provided when using liquid crystal Fabry-Perot filters;
- very quick (<1ms) changes of the spectral filter can be achieved such that complete spectra generated within space spectrometer conventional integration time of 1s;
- due to the use of the combination of Fabry-Perot filters very small spectral cross-talk is achieved; and
- polarization resolving 2d imaging spectrometer when using two polarisation channels or rotating polarizer.

It is clear to a person skilled in the art that the statements set forth herein under use of hardware circuits, software means or a combination thereof may be implemented. The software means can be related to programmed microprocessors or a general computer, an ASIC (Application Specific Integrated Circuit) and/or DSPs (Digital Signal Processors). For example, the imaging spectrometer, the light transmission path and the plurality of light transmission paths may be implemented partially as a computer, a logical circuit, an FPGA (Field Programmable Gate Array), a processor (for example, a microprocessor, microcontroller ($\mu$C) or an array processor)/a core/a CPU (Central Processing Unit), an FPU (Floating Point Unit), NPU (Numeric Processing Unit), an ALU (Arithmetic Logical Unit), a Coprocessor (further microprocessor for supporting a main processor (CPU)), a GPGPU (General Purpose Computation on Graphics Processing Unit), a multi-core processor (for parallel computing, such as simultaneously performing arithmetic operations on multiple main processor(s) and/or graphical processor(s)) or a DSP. It is further clear to the person skilled in the art that even if the herein-described details will be described in terms of a method, these details may also be implemented or realized in a suitable device, a computer processor or a memory connected to a processor, wherein the memory can be provided with one or more programs that perform the method, when executed by the processor. Therefor, methods like swapping and paging can be deployed.

Even if some of the aspects described above have been described in reference to the light transmission path, these aspects may also apply to plurality of light transmission paths and the imaging spectrometer. Likewise, the aspects described above in relation to imaging spectrometer may be applicable in a corresponding manner to light transmission path and the plurality of light transmission paths. Furthermore, the aspects described above in relation to the plurality of light transmission paths may be applicable in a corresponding manner to the light transmission path as well as the imaging spectrometer.

It is also to be understood that the terms used herein are for purpose of describing individual embodiments and are not intended to be limiting. Unless otherwise defined, all technical and scientific terms used herein have the meaning which corresponds to the general understanding of the skilled person in the relevant technical field of the present disclosure; they are to be understood too neither too far nor too narrow. If technical terms are used incorrectly in the present disclosure, and thus do not reflect the technical concept of the present disclosure, these should be replaced by technical terms which convey a correct understanding to the skilled person in the relevant technical field of the present disclosure. The general terms used herein are to be construed based on the definition in the lexicon or the context. A too narrow interpretation should be avoided.

It is to be understood that terms such as e.g. "comprising" "including" or "having" etc. mean the presence of the described features, numbers, operations, acts, components, parts, or combinations thereof, and do not exclude the presence or possible addition of one or more further features, numbers, operations, acts, components, parts or their combinations.

Although terms like "first" or "second" etc. may be used to describe different components or features, these components or features are not to be limited to these terms. With the above terms, only one component is to be distinguished from the other. For example, a first component may be referred to as a second component without departing from the scope of the present disclosure; and a second component may also be referred to as a first component. The term "and/or" includes both combinations of the plurality of related features, as well as any feature of that plurality of the described plurality of features.

In the present case, if a component is "connected to", "in communication with" or "accesses" another component, this may mean that it is directly connected to or directly accesses the other component; however, it should be noted that another component may be therebetween. If, on the other hand, a component is "directly connected" to another component or "directly accesses" the other component, it is to be understood that no further components are present therebetween.

In the following, the preferred embodiments of the present disclosure will be described with reference to the accompanying drawings; the same or similar components are always provided with the same or similar reference symbols. In the description of the present disclosure, detailed explanations of known connected functions or constructions are omitted, insofar as they are unnecessarily distracting from the present disclosure. The accompanying drawings are illustrative of the present disclosure and are not to be construed as a limitation.

Other objects, features, advantages and applications will become apparent from the following description of non-limiting embodiments regarding the accompanying drawings. In the drawings, all described and/or illustrated features, alone or in any combination form the subject matter disclosed therein, irrespective of their grouping in the claims or their relations/references. The dimensions and proportions of components or parts shown in the figures are not necessarily to scale; these dimensions and proportions may differ from illustrations in the figures and implemented embodiments.

Figure 1    schematically illustrates an imaging spectrometer;

Figure 2    schematically illustrates a telescope for an imaging spectrometer;

Figure 3    schematically illustrates a plurality of transmission paths for an imaging spectrometer in a cross-sectional view at an image plane of a telescope of the imaging spectrometer;

Figure 4a    schematically illustrates a liquid crystal Fabry-Perot filter element for a transmission path of an imaging spectrometer; and

Figure 4b    schematically illustrates a transmission path for an imaging spectrometer; and

Figure 5    schematically illustrates different filter characteristics of liquid crystal Fabry-Pérot filter elements and a combined filter characteristic of consecutive liquid crystal Fabry-Pérot filter elements; and

Figure 6    schematically illustrates a detection device for an imaging spectrometer.

The light transmission path, the plurality of such light transmission paths and the imaging spectrometer will now be described with respect to the embodiments.

In the following, without being restricted thereto, specific details are set forth to provide a thorough understanding of the present disclosure. However, it is clear to the skilled person that the present disclosure may be used in other embodiments, which may differ from the details set out below.

It will be understood that when an element is referred to as being "connected" or "coupled" to another element, the elements may be directly connected or coupled or via one or more intervening elements. If two elements A and B are combined using an "or", this is to be understood to disclose all possible combinations, i.e. only A, only B as well as A and B. An alternative wording for the same combinations is "at least one of A and B". The same applies for combinations of more than 2 elements.

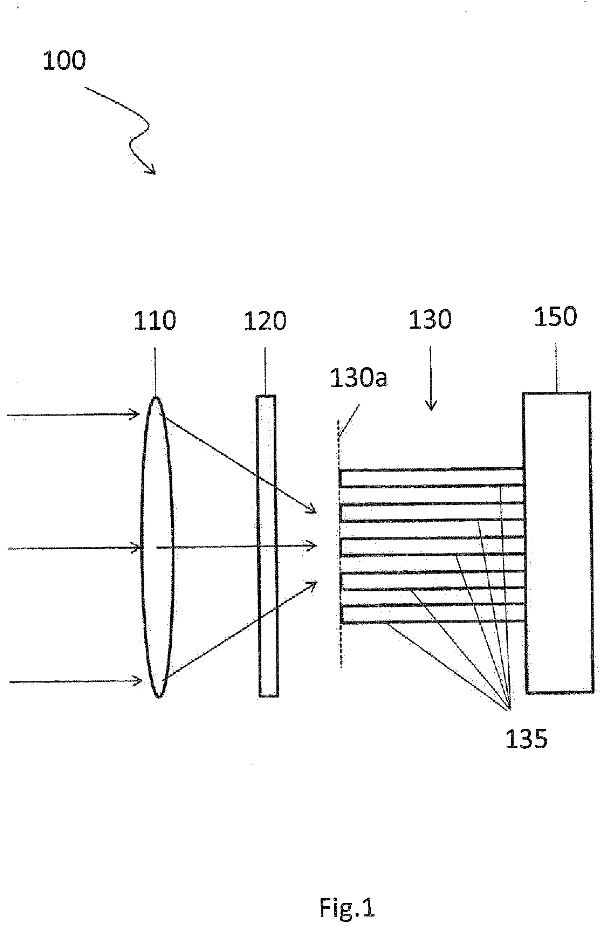

Figure 1 schematically illustrates an imaging spectrometer 100. The imaging spectrometer comprises a telescope 100, a polarizer 120, a plurality of light transmission paths 130 and a detection device 150. As can be seen from figure 1, light coming from a respective area to be imaged hits the telescope 110 which focusses the light on its image plane 130a. The plurality of light transmission paths 130 is arranged such that each of the plurality of light transmission paths 130 is arranged in parallel extending from the image plane 130a. This means each the plurality of light transmission paths 130 has a respective end fixed at the image plane 130a. The polarizer 120 through which the focussed light travels before hitting the image plane 130a polarizes this light in a predetermined direction. In particular, the polarizer 120 is included in the telescope light path in-front of the image plane 130a.

Each of the plurality of light transmission paths 130 has a dimension to ensure that the light does not change this polarization direction through the respective one of the plurality of light transmission paths 130. After passing the plurality of light transmission paths 130, an intensity of the light can be detected by the detection device 150. In consequence thereof, an intensity map due to a specific frequency can be constructed. This may be a single information image for a single frequency. To gather spectral data for a spectrum image, this is performed over time for different frequencies. To bandpass filter the light to get an image with different frequency information, the transmission paths comprise tuneable bandpass filters which change their respective bandpass characteristics over time in accordance with a sampling rate. Thus a specific spectrum may be sampled and an image with spectrum information may be gathered.

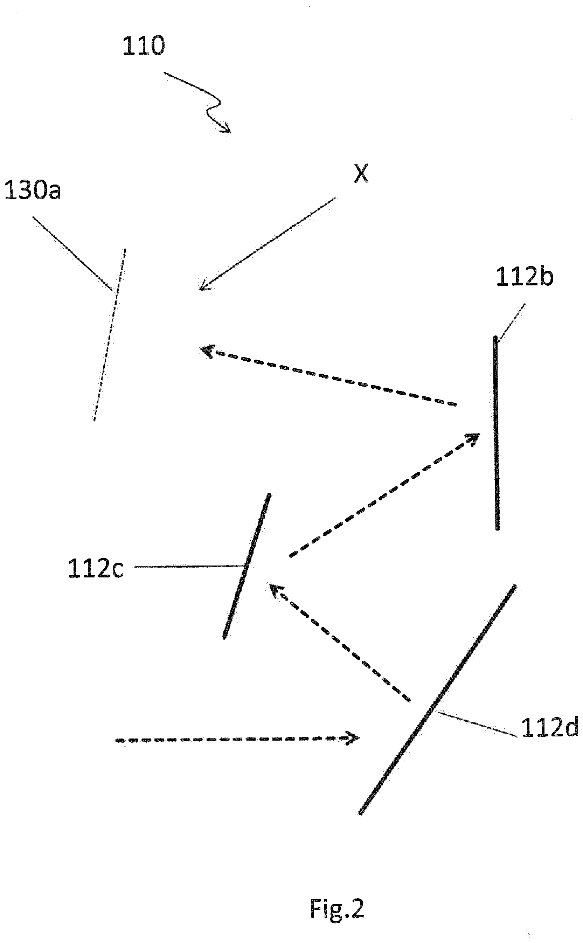

More details and aspects are mentioned in connection with the embodiments described above or below. The embodiment shown in Fig. 1 may comprise one or more optional additional features corresponding to one or more aspects mentioned in connection with the proposed concept or one or more embodiments described below (e.g. Fig. 2 - 6).

Figure 2 schematically illustrates a telescope 110 for an imaging spectrometer. The telescope 110 images a spatial scene (on Earth) onto an image plane 130a. The telescope is telecentric. The arrows having a dashed line illustrated the incoming light and the reflection from different mirrors of the telescope 110. Inside the mirror arrangement at position x, a polarizer can be placed. This place may be near the imaging plane 130a in order to not have a variation in the polarization direction of the incoming light. The image plane 130a may be a telecentric image plane 130a for placing entrance surfaces of a 2D fiber bundle, for example the plurality of transmission paths as described herein.

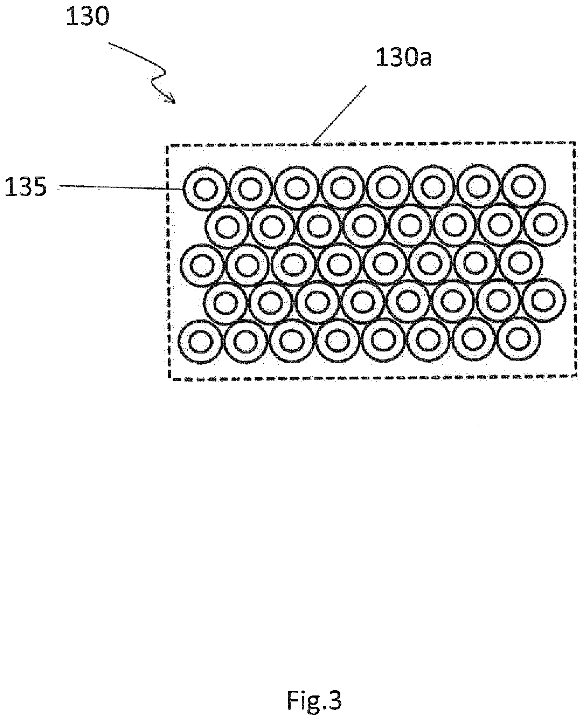

More details and aspects are mentioned in connection with the embodiments described above or below. The embodiment shown in Fig. 2 may comprise one or more optional additional features corresponding to one or more aspects mentioned in connection with the proposed concept or one or more embodiments described above (e.g. Fig. 1) or below (e.g. Fig. 3 - 6).

Figure 3 schematically illustrates a plurality of light transmission paths 130 for an imaging spectrometer in a cross-sectional view at an image plane 130a of a telescope of the imaging spectrometer. The image plane 130a may be a coupling interface for the polarized light received by a telescope and transmitted through a polarizer (both not shown in figure 3). Each 135 of the plurality of light transmission paths 130 may comprise an optical fiber as coupling element at the image plane 130a. An end of each optical fiber 135 may be arranged or fixed at the image plane 130a. The optical fiber 135 may comprise a core and a cladding. The core may have a higher refraction index as the cladding in order to guide light through the fiber. This may be a conventional optical waveguide in a form of an optical fiber. The optical fiber 135 may be made of silica. The cladding surrounds the core and has a lower index of refraction than the core. The light is kept in the core by the total internal reflection which causes the optical fiber to act as a waveguide.

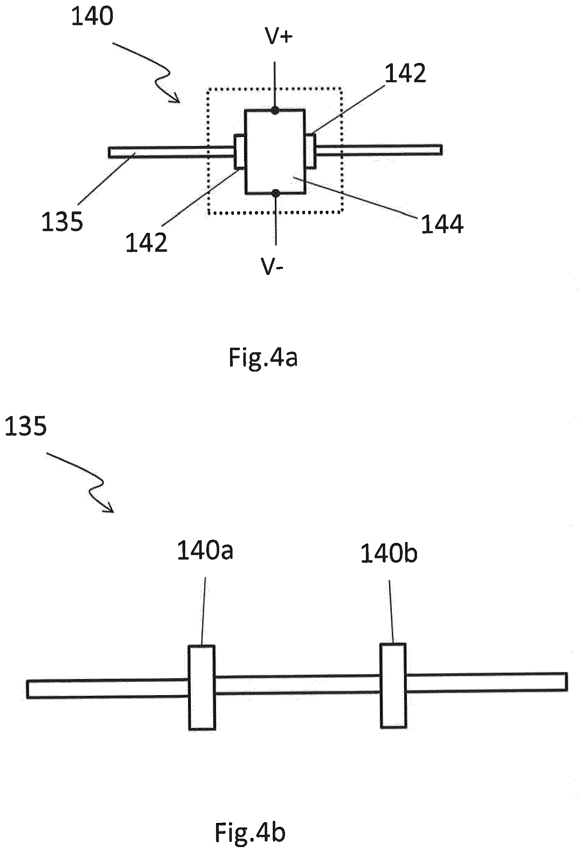

More details and aspects are mentioned in connection with the embodiments described above or below. The embodiment shown in Fig. 3 may comprise one or more optional additional features corresponding to one or more aspects mentioned in connection with the proposed concept or one or more embodiments described above (e.g. Fig. 1 - 2) or below (e.g. Fig. 4a, 4b - 6).

Figure 4a schematically illustrates a liquid crystal Fabry-Pérot filter element 140 for a transmission path of an imaging spectrometer. The liquid crystal Fabry-Pérot filter element 140 comprises two parallel partially reflecting plane mirror surfaces 142. Further, the liquid crystal Fabry-Pérot filter element 140 comprises a space 144 filled with liquid crystal. Two voltage contacts V+ and V- are arranged at the space. The so induced electric field may change a refractive index of the liquid crystal inside the liquid crystal Fabry-Perot filter element 140.

The transmission may be described as follows:

$$T_e = \frac{(1-R)^2}{1 - 2R\cos\delta + R^2} = \frac{1}{1 + F\sin^2\left(\frac{\delta}{2}\right)},$$

$$F = \frac{4R}{(1-R)^2}$$

$$\delta = \left(\frac{2\pi}{\lambda}\right) 2n\ell \cos\theta.$$

wherein:

Te = Transmission of Fabry-Perot filter;
R = reflectivity of mirrors;
n = index of refraction of liquid crystal between mirrors;
l = distance between parallel mirrors; and
$\Theta$ = angle of incidence of light, for example $\Theta = 0°$.

Accordingly, the transmission is dependent on the wavelength (or frequency). In consequence, an adaption of the wavelength/frequency may vary a transmission behavior. The wavelength/frequency is dependent on the refractive index of the liquid crystal. Due to a change of the refractive index, the liquid crystal Fabry-Pérot filter element 140 experiences a change in its bandpass characteristic. In particular, the liquid crystal Fabry-Perot filter element 140 has a bandpass characteristic, which may be combined with another liquid crystal Fabry-Perot filter element 140 as illustrated with respect to figure 4b.

More details and aspects are mentioned in connection with the embodiments described above or below. The embodiment shown in Fig. 4a may comprise one or more optional additional features corresponding to one or more aspects mentioned in connection with the proposed concept or one or more embodiments described above (e.g. Fig. 1 - 3) or below (e.g. Fig. 4b - 6).

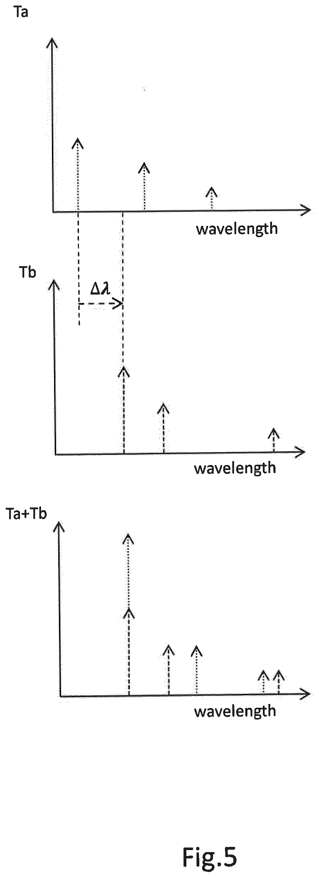

Figure 4b schematically illustrates a transmission path 135 for an imaging spectrometer. The transmission path 135 comprises two liquid crystal Fabry-Perot filter elements 140a and 140b. The shift of a spectral peak in each Fabry-Perot filter element (also called filter cell) is induced by a change of the refractive index of the liquid crystal (as described above with respect to figure 4a and illustrated in figure 5). Figure 5 schematically illustrates different filter characteristics of liquid crystal Fabry-Pérot filter elements 140a and 140b and a combined filter characteristic of consecutive liquid crystal Fabry-Pérot filter elements. For example, in order to shift the spectral peak of Fabry-Pérot filter element 140a to the position of the peak of Fabry-Pérot filter element 140b, a change of the index of refraction of 0.0036 (from 1.5 to 1.5036) may be necessary. This may be achieved by changing the voltage by 0,7 Volt at the liquid crystal when using a working position (bias voltage) at 7 Volt. The shift in frequency/wavelength may be given by the following equation:

$$\varDelta\lambda - \left(\frac{2l}{k}\right)\varDelta n, \; k - integer$$

A sampling rate may be adjusted to the shift in frequency/wavelength to get intensity samples over a desired frequency range.

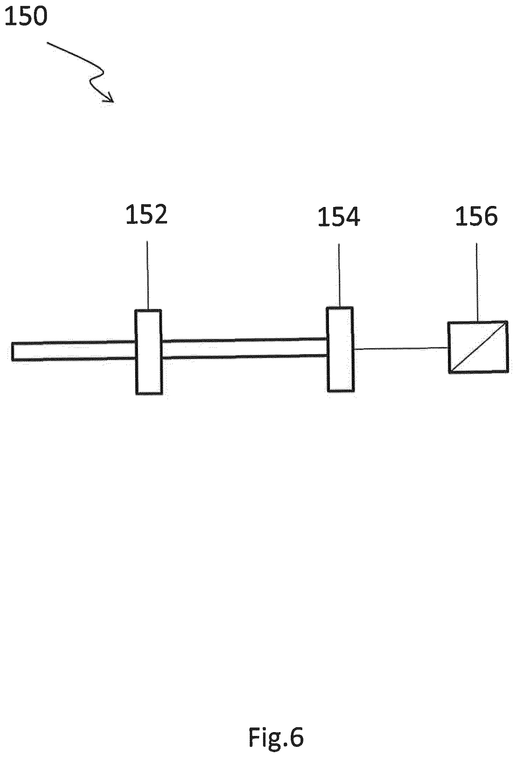

More details and aspects are mentioned in connection with the embodiments described above or below. The embodiment shown in Fig. 4b and 5 may comprise one or more optional additional features corresponding to one or more aspects mentioned in connection with the proposed concept or one or more embodiments described above (e.g. Fig. 1 - 4a) or below (e.g. Fig. 6).

Figure 6 schematically illustrates a detection device 150 for an imaging spectrometer.

The detection device 150 comprises a spectral filter 152. The spectral filter may be a broad-band and/or out-of band suppression filter. Further, the detection device 150 comprises a photodiode 154. The detection device 150 comprises an analog to digital (A/D) converter to digitize detected light signals into corresponding digital intensity samples. The photodiode 154 is placed at each fiber end measuring the light power passing the spectral filter 152. The photodiode 154 provides a response for incoming light for the full spectral range to be analyzed. The photodiode 154 may be at least one of the following: Silicon Photodiode (UV2/VIS/NIR), InGaAs Photodiode (NIR/SWIR) or UV Photodiode (UV1/UV2).

More details and aspects are mentioned in connection with the embodiments described above or below. The embodiment shown in Fig. 6 may comprise one or more optional additional features corresponding to one or more aspects mentioned in connection with the proposed concept or one or more embodiments described above (e.g. Fig. 1 - 5) or below.

According to one or more aspects, a very quick spectral tuning with liquid-crystal based Fabry-Perot filters may allow producing spectral information for a spatial 2D object (Earth) instantaneously (within an integration time of smaller than 3 seconds (or 2 seconds or 1 second)). The integration time may be in particular 1 second. For example, the optical fiber(s) and tuneable spectral filters (Fabry-Perot filters) based 2D imaging spectrometer does not include conventional imaging optical elements like mirrors. For example, an improvement in at least one of the following may be reached: size, mass, costs, and schedule. For example, 2D imaging spectrometer may be provided for space optical applications. For example, spectral information may be measured with varying spectral filter properties for example via a liquid crystal based Fabry-Perot filter combination where a low voltage change resides in spectral tuning possibility. For example, 2D imaging spectrometer may be provided with using a set of photo-diodes (very sensitive, high dynamic range, useful for broad wavelength range) as detection device.

According to one or more embodiments, the polarizer orientation may be linked to a Liquid-crystal molecule orientation of the Fabry-Perot filters. The polished ends of a set of fibers arranged as 2D fiber bundle may be positioned such that the entrance surfaces of the fibers are at the telescope image plane. The NA of the fibers matches the NA' of the telescope. The light entering each optical fiber may be spectrally filtered and the remaining transmitted light power may be determined. The spectral filter may be an out-of band suppression filter, and a staggered Fabry-Perot filter ensemble.

According to one or more embodiments, the Fabry-Perot filter can be a cell with two ends of the incoming and outgoing optical fiber being precisely polished and parallel. These fiber ends may be HR/silver coated forming a Fabry-Perot filter cell. The optical length of the cavity may be changed via a change of the index of refraction of a liquid crystal present between the mirrors. This change may be in the direction of the incident polarized light. With varying the low voltage at the liquid crystal cell a fast selection/switch of the analyzed wavelength/frequency may be achieved. The staggered Fabry-Perot cells together with an out-of band suppression filter may allow selecting one single wavelength/frequency of interest.

According to one or more embodiments, a fast detection device, e.g. a photodiode, may be used for the detection of the radiometric signal of the selected wavelength/frequency.

According to one or more embodiments, the full chain (transmission path) may be radiometrically calibrated such that the input signal radiance/irradiance can be accurately evaluated. A fast A/D converter may provide the measured digital signal.

A detector array, e.g. CCD, for use in the visible spectral range, may also be used as detection device. The optical fibers of the 2D fiber bundle then may end in front of the sensitive detector surface.

According to one or more embodiments, wavelength selection and radiometric measurements can be done very quickly (within 0.1ms). For a wavelength sampling of 1000 a measurement may then be performed within 0.1s. The spatial resolution may be fixed by the number of fiber channels. A 2D spectra picture may be recorded.

For example, due to the non-cross-talk between fiber channels very faint objects can be measured together with very bright objects at close positions.

According to one or more embodiments, the liquid-crystal index of refraction may be changed via an orientation of uniaxial molecules by the applied electric field. In a parallel electric field the molecule rotation (electric dipole moment) may be predominantly along the field direction (one type of liquid crystal). The incident light with its polarization direction along the electric field direction may experience then a change of index of refraction, whereas the index of refraction is not changed for the light with the polarization direction orthogonal to it. Thus, the spectral filter may be tunable for the polarization direction in field direction and static for the polarization direction perpendicular to it. For example, this static component needs to be excluded from the detected light beam. This can be done in a first possible embodiment by placing a polarizer close to the liquid-crystal Fabry-Perot filter cells allowing only the component with polarization direction along the electric field to pass. Provided the optical fibers are short and not twisted (and conserve the polarization state) one can place a polarizer close to the image plane of the telescope. A second possible embodiment may comprise suppressing the small spectral range of the static component by a fixed spectral filter element. A spectral line filter (or also a notch filter) with its suppression wavelength may be selected and the Fabry-Perot cells may be defined such that the static (ordinary) transmission is at this wavelength/frequency. By rotating the direction of the applied electric field at the liquid crystal cell the polarization direction can be selected for the analyzed light. According to one or more embodiments, in case the incident polarization is not known (and thus is also not unpolarized light) two measurements may be performed, where the polarizer direction and the electric field at the liquid crystal are rotated simultaneously by 90 degree. For this purpose, a polarization beam-splitter may be used in order to separate the polarization directions and attach at least part of an electro-optical 2D imaging spectrometer as described above at each of the two channels. Alternatively, the polarizer direction may be rotated (e.g. by rotating mechanically the polarizer by 90degree) and simultaneously the electric field at the liquid crystal of the spectral filters. Spectral 2D images may be recorded for each of the two polarization directions. Thus, a polarization resolved spectral 2d image may be detected.

The aspects and features mentioned and described together with one or more of the previously detailed examples and figures, may as well be combined with one or more of the other examples in order to replace a like feature of the other example or in order to additionally introduce the feature to the other example.

**Claims**

1.  A light transmission path (135) for a spectrometer, comprising:

    a first liquid crystal Fabry-Pérot filter element (140a) having a first bandpass filter characteristic for light being polarized in a predetermined direction based on a first voltage applied at the first liquid crystal Fabry-Pérot filter element (140a); and
    a second liquid crystal Fabry-Pérot filter element (140b) having a second bandpass filter characteristic for light being polarized in the predetermined direction based on a second voltage applied at the second liquid crystal Fabry-Pérot filter element (140a);
    wherein the first and second liquid crystal Fabry-Pérot filter elements (140a, 140b) are interconnected and configured to shift the first and second bandpass filter characteristics to each other to form a common bandpass filter characteristic of the light transmission path (135) according to a difference between the first and second voltages,
    **characterized in that** each of the first and second liquid crystal Fabry-Pérot filter elements (140a, 140b) comprises a first plane end surface and a second plane end surface connected to a respective optical fiber, wherein the first plane end surface and the second plane end surface are arranged parallel to each other adapted to only transmit the polarized light.

2.  The light transmission path (135) according to claim 1, wherein, when a difference between the first and second voltages is varied according to a sampling rate, the first and second liquid crystal Fabry-Pérot filter elements (140a, 140b) are configured to shift the common bandpass filter characteristic of the light transmission path (135) along a frequency range based on the sampling rate to bandpass filter the polarized light corresponding to respective frequencies of the frequency range.

3.  The light transmission path (135) according to claim 1 or 2, where the light path is transmissive for one linear polarization direction and non-transmissive for the linear polarization direction orthogonal to it.

4.  The light transmission path (135) according to claim 3 where the direction of the linear polarization direction for which the light path is transmissive can be adjusted.

5.  The light transmission path (135) according to any one of the foregoing claims, wherein each of the first and second liquid crystal Fabry-Pérot filter elements (140a, 140b) has respective connecting pins for applying the first and second voltages, respectively.

6.  The light transmission path (135) according to any one of the foregoing claims, wherein electrical fields induced by the first and second voltages have a same direction corresponding to a direction of the polarized light.

7.  The light transmission path (135) according to any one of the foregoing claims, wherein a bias voltage of each of the first and second voltages is in a range between 5 and 8 V.

8.  The light transmission path (135) according to any one of the foregoing claims, wherein the difference between the first and second voltages varies between 1mV to 10mV.

9.  The light transmission path (135) according to any one of the foregoing claims, wherein the difference between the first and second voltages is varied by varying the first voltage and/or the second voltage.

10. The light transmission path (135) according to any one of the foregoing claims, wherein the sampling rate is smaller than 200 milliseconds.

11. The light transmission path (135) according to any one of the foregoing claims, wherein the frequency range includes a visible light spectrum.

12. A plurality of light transmission paths (130), each being a light transmission path (135) according to any one of the foregoing claims.

13. A spectrometer for two-dimensional, 2D, imaging of a scene, the spectrometer comprising:

a telescope (110) having an image plane (130a), wherein the telescope (110) is configured to image a scene onto an image plane (130a) by focusing light received from the scene in a direction of the image plane (130a);
a polarizing device (120) arranged between the telescope (110) and the image plane (130a), wherein the polarizing device (120) is configured to polarize the light;
a plurality of light transmission paths (130) according to claim 12 +3- arranged such that a respective first end of each of the plurality of light transmission paths (130) ends at the image plane (130a),
a detection device (150) arranged downstream of the plurality of light transmission paths (130), wherein the detection device (150) is arranged such that a respective second end of each of the plurality of light transmission paths (130) ends at the detection device (150), wherein the detection device (150) is configured to measure respective intensities of the bandpass filtered polarized light according to the sampling rate to derive a 2D image of the scene.

14. The spectrometer according to claim 13, wherein the polarizing device (120) is a polarizer adapted to polarize the light passed through the telescope (110).

15. The spectrometer according to claim 13, wherein the polarizing device (120) is a beam splitter adapted to split the light from the telescope into different directions, the image plane and another image plane, and to polarize the light in two directions perpendicular to each other; and further comprising:

another plurality of light transmission paths according to claim 12 arranged such that a respective first end of each of the other plurality of light transmission paths ends at the other image plane, and
another detection device arranged downstream of the other plurality of light transmission paths, wherein the other detection device is arranged such that a respective second end of each of the other plurality of light transmission paths ends at the other detection device, wherein the other detection device is configured to measure respective intensities of the bandpass filtered polarized light according to the sampling rate to derive a 2D image of the scene.

16. The spectrometer according to any one of claims 13 to 15 further comprising:
a static spectral line filter element configured to absorb the light that passes the plurality of light transmission paths with a polarization direction orthogonal to the direction of index of refraction change in the liquid crystal Fabry-Pérot filter elements.

## Patentansprüche

1. Lichtübertragungspfad (135) für ein Spektrometer, umfassend:

ein erstes Flüssigkristall-Fabry-Pérot-Filterelement (140a) mit einer ersten Bandpassfiltercharakteristik für Licht, das in einer vorbestimmten Richtung polarisiert ist, basierend auf einer ersten Spannung, die an das erste Flüssigkristall-Fabry-Pérot-Filterelement (140a) angelegt wird; und
ein zweites Flüssigkristall-Fabry-Pérot-Filterelement (140b) mit einer zweiten Bandpassfiltercharakteristik für Licht, das in der vorbestimmten Richtung polarisiert ist, basierend auf einer zweiten Spannung, die an das zweite Flüssigkristall-Fabry-Pérot-Filterelement (140a) angelegt wird;
wobei das erste und das zweite Flüssigkristall-Fabry-Pérot-Filterelement (140a, 140b) miteinander verbunden und konfiguriert sind, die erste und die zweite Bandpassfiltercharakteristik zueinander zu verschieben, um eine gemeinsame Bandpassfiltercharakteristik des Lichtübertragungspfades (135) gemäß einer Differenz zwischen der ersten und der zweiten Spannung zu bilden,
**dadurch gekennzeichnet, dass** jedes des ersten und des zweiten Flüssigkristall-Fabry-Pérot-Filterelements (140a, 140b) eine erste ebene Endfläche und eine zweite ebene Endfläche umfasst, die mit einer jeweiligen optischen Faser verbunden sind, wobei die erste ebene Endfläche und die zweite ebene Endfläche parallel zueinander angeordnet sind und angepasst sind, nur das polarisierte Licht zu übertragen.

2. Lichtübertragungspfad (135) nach Anspruch 1, wobei, wenn eine Differenz zwischen der ersten und der zweiten Spannung entsprechend einer Abtastrate variiert wird, das erste und das zweite Flüssigkristall-Fabry-Pérot-Filterelement (140a, 140b) konfiguriert sind, die gemeinsame Bandpassfiltercharakteristik des Lichtübertragungspfads (135) entlang eines Frequenzbereichs auf der Grundlage der Abtastrate zu verschieben, um das polarisierte Licht entsprechend jeweiligen Frequenzen des Frequenzbereichs bandpasszufiltern.

3.  Lichtübertragungspfad (135) nach Anspruch 1 oder 2, wobei der Lichtpfad für eine lineare Polarisationsrichtung durchlässig und für die dazu orthogonale lineare Polarisationsrichtung nicht durchlässig ist.

4.  Lichttransmissionspfad (135) nach Anspruch 3, wobei die Richtung der linearen Polarisationsrichtung, für die der Lichtpfad durchlässig ist, eingestellt werden kann.

5.  Lichttransmissionspfad (135) nach einem der vorhergehenden Ansprüche, wobei jedes des ersten und des zweiten Flüssigkristall-Fabry-Pérot-Filterelements (140a, 140b) entsprechende Anschlussstifte zum Anlegen der ersten bzw. zweiten Spannung aufweist.

6.  Lichtübertragungspfad (135) nach einem der vorhergehenden Ansprüche, wobei durch die erste und zweite Spannung induzierten elektrischen Felder eine gleiche Richtung haben, die einer Richtung des polarisierten Lichts entspricht.

7.  Lichtübertragungspfad (135) nach einem der vorhergehenden Ansprüche, wobei eine Vorspannung jeder der ersten und zweiten Spannung in einem Bereich zwischen 5 und 8 V liegt.

8.  Lichtübertragungspfad (135) nach einem der vorhergehenden Ansprüche, wobei die Differenz zwischen der ersten und der zweiten Spannung zwischen 1 mV und 10 mV variiert.

9.  Lichttransmissionspfad (135) nach einem der vorhergehenden Ansprüche, wobei die Differenz zwischen der ersten und der zweiten Spannung durch Variieren der ersten Spannung und/oder der zweiten Spannung variiert wird.

10. Lichttransmissionspfad (135) nach einem der vorhergehenden Ansprüche, wobei die Abtastrate kleiner als 200 Millisekunden ist.

11. Lichttransmissionspfad (135) nach einem der vorhergehenden Ansprüche, wobei der Frequenzbereich ein sichtbares Lichtspektrum umfasst.

12. Eine Vielzahl von Lichttransmissionspfaden (130), wobei jeder ein Lichttransmissionspfad (135) nach einem der vorhergehenden Ansprüche ist.

13. Spektrometer zur zweidimensionalen, 2D, Abbildung einer Szene, wobei das Spektrometer umfasst:

    ein Teleskop (110) mit einer Bildebene (130a), wobei das Teleskop (110) konfiguriert ist, eine Szene auf eine Bildebene (130a) abzubilden, indem es von der Szene empfangenes Licht in eine Richtung der Bildebene (130a) fokussiert;
    eine Polarisationsvorrichtung (120), die zwischen dem Teleskop (110) und der Bildebene (130a) angeordnet ist, wobei die Polarisationsvorrichtung (120) konfiguriert ist, Licht zu polarisieren;
    eine Vielzahl von Lichtübertragungspfaden (130) nach Anspruch 12, die so angeordnet sind, dass jeweils ein erstes Ende jedes der Vielzahl von Lichtübertragungspfaden (130) in der Bildebene (130a) endet,
    eine Erfassungsvorrichtung (150), die stromabwärts der Vielzahl von Lichtübertragungspfaden (130) angeordnet ist, wobei die Erfassungsvorrichtung (150) so angeordnet ist, dass ein jeweiliges zweites Ende jedes der Vielzahl von Lichtübertragungspfaden (130) an der Erfassungsvorrichtung (150) endet, wobei die Erfassungsvorrichtung (150) konfiguriert ist, jeweilige Intensitäten des bandpassgefilterten polarisierten Lichts gemäß der Abtastrate zu messen, um ein 2D-Bild der Szene abzuleiten.

14. Spektrometer nach Anspruch 13, wobei die Polarisationsvorrichtung (120) ein Polarisator ist, der ausgebildet ist, das durch das Teleskop (110) hindurchtretende Licht zu polarisieren.

15. Spektrometer nach Anspruch 13, wobei die Polarisationsvorrichtung (120) ein Strahlteiler ist, der ausgebildet ist, das Licht von dem Teleskop in verschiedene Richtungen, die Bildebene und eine andere Bildebene aufzuteilen und das Licht in zwei zueinander senkrechten Richtungen zu polarisieren; und ferner umfassend:

    eine weitere Vielzahl von Lichtübertragungspfaden nach Anspruch 12, die so angeordnet sind, dass ein jeweiliges erstes Ende jedes der anderen Vielzahl von Lichtübertragungspfaden in der anderen Bildebene endet, und eine andere Erfassungsvorrichtung, die stromabwärts der anderen Vielzahl von Lichtübertragungspfaden angeordnet ist, wobei die andere Erfassungsvorrichtung so angeordnet ist, dass ein jeweiliges zweites Ende jedes der anderen Vielzahl von Lichtübertragungspfaden an der anderen Erfassungsvorrichtung endet, wobei die andere Erfassungsvorrichtung konfiguriert ist, jeweilige Intensitäten des bandpassgefilterten polarisierten Lichts gemäß der Abtastrate zu messen, um ein 2D-Bild der Szene abzuleiten.

**16.** Spektrometer nach einem der Ansprüche 13 bis 15, das ferner umfasst:
ein statisches Spektrallinienfilterelement, das konfiguriert ist, das Licht zu absorbieren, das die Vielzahl von Lichtübertragungspfaden mit einer Polarisationsrichtung orthogonal zu der Richtung von einer Brechungsindexänderung in den Flüssigkristall-Fabry-Pérot-Filterelementen zu passieren.

**Revendications**

**1.** Trajet de transmission de lumière (135) pour un spectromètre, comprenant:

un premier élément de filtre Fabry-Pérot à cristaux liquides (140a) ayant une première caractéristique de filtre passe-bande pour la lumière polarisée dans une direction prédéterminée sur la base d'une première tension appliquée à l'élément de filtre Fabry-Pérot à cristaux liquides (140a); et
un second élément de filtre Fabry-Pérot à cristaux liquides (140b) ayant une seconde caractéristique de filtre passe-bande pour la lumière polarisée dans une direction prédéterminée sur la base d'une seconde tension appliquée à l'élément de filtre Fabry-Pérot à cristaux liquides (140a); et
dans lequel les premier et second éléments de filtre Fabry-Pérot à cristaux liquides (140a, 140b) sont interconnectés et sont conçus pour décaler les première et seconde caractéristique de filtre passe-bande l'une de l'autre pour former une caractéristique de filtre passe-bande du trajet de transmission de lumière (135) selon une différence entre les première et seconde tensions,
**caractérisé en ce que** chacun des premier et second éléments de filtre Fabry-Pérot à cristaux liquides (140a, 140b) comprend une première surface d'extrémité plane et une seconde surface d'extrémité plane connectées à une fibre optique respective, dans lequel la première surface d'extrémité plane et la seconde surface d'extrémité plane sont disposées parallèles entre elles conçues uniquement pour transmettre la lumière polarisée.

**2.** Trajet de transmission de lumière (135) selon la revendication 1, dans lequel, lorsqu'une différence entre les première et seconde tensions varie selon un taux d'échantillonnage, les premier et second éléments de filtre Fabry-Pérot à cristaux liquides (140a, 140b) sont conçus pour décaler la caractéristique de filtre passe-bande commune du trajet de transmission de lumière (135) le long d'une gamme de fréquences sur la base du taux d'échantillonnage vers un filtre passe-bande, la lumière polarisée correspondant à des fréquences respectives de la gamme de fréquences.

**3.** Trajet de transmission de lumière (135) selon la revendication 1 ou 2, dans lequel le trajet de lumière est transmissif pour une direction de polarisation linéaire et non transmissif pour la direction de polarisation linéaire orthogonale à celui-ci.

**4.** Trajet de transmission de lumière (135) selon la revendication 3, dans lequel la direction de la direction de polarisation linéaire pour laquelle le trajet de lumière est transmissif peut être réglé.

**5.** Trajet de transmission de lumière (135) selon l'une quelconque des revendications précédentes, dans lequel chacun des premier et second éléments de filtre Fabry-Pérot à cristaux liquides (140a, 140b) a des broches de connexion respectives pour appliquer les première et seconde tensions, respectivement.

**6.** Trajet de transmission de lumière (135) selon l'une quelconque des revendications précédentes, dans lequel des champs électriques induits par les première et seconde tensions ont une direction identique correspondant à la lumière polarisée.

**7.** Trajet de transmission de lumière (135) selon l'une quelconque des revendications précédentes, dans lequel une tension de polarisation de chacune des première et seconde tensions se situe dans une plage entre 5 et 8 V.

**8.** Trajet de transmission de lumière (135) selon l'une quelconque des revendications précédentes, dans lequel la différence entre les première et seconde tensions varient de 1 mV à 10 mV.

**9.** Trajet de transmission de lumière (135) selon l'une quelconque des revendications précédentes, dans lequel la différence entre les première et seconde tensions est modifiée par modification de la première tension et/ou de la seconde tension.

10. Trajet de transmission de lumière (135) selon l'une quelconque des revendications précédentes, dans lequel la fréquence d'échantillonnage est inférieure à 200 millisecondes.

11. Trajet de transmission de lumière (135) selon l'une quelconque des revendications précédentes, dans lequel la gamme de fréquences comprend un spectre de lumière visible.

12. Pluralité de trajets de transmission de lumière (130), chacun étant un trajet de transmission de lumière (135) selon l'une quelconque des revendications précédentes.

13. Spectromètre pour imagerie bidimensionnelle, 2D, d'une scène, le spectromètre comprenant:

un télescope (110) ayant un plan image (130a), dans lequel le télescope (110) est conçu pour imager une scène sur un plan image (130a) en focalisant la lumière reçue en provenance de la scène dans une direction du plan image (130a);
un dispositif de polarisation (120) disposé entre le télescope (110) et le plan d'image (130a), dans lequel le dispositif de polarisation (120) est conçu pour polariser la lumière;
une pluralité de trajets de transmission de lumière (130) selon la revendication 12, de sorte qu'une première extrémité respective de chacun parmi la pluralité de trajets de transmission de lumière (130) se termine au niveau du plan image (130a),
un dispositif de détection (150) disposé en aval de la pluralité des trajets de transmission de lumière (130), dans lequel le dispositif de détection (150) est disposé de sorte qu'une seconde extrémité respective de chacun parmi la pluralité des transmissions de lumière (130) se termine au niveau du plan image (150), dans lequel le dispositif de détection (150) est conçu pour mesurer les intensités respectives de la lumière polarisée filtrée par le filtre passe-bande selon la fréquence d'échantillonnage pour dériver une image 2D de la scène.

14. Spectromètre selon la revendication 13, dans lequel le dispositif de polarisation (120) est un polariseur conçu pour polariser la lumière qui a traversé le télescope (110).

15. Spectromètre selon la revendication 13, dans lequel le dispositif de polarisation (120) est un diviseur de faisceau conçu pour diviser la lumière provenant du télescope en différentes directions, le plan image et un autre plan image, et pour polariser la lumière dans deux directions perpendiculaires l'une de l'autre; et comprenant en outre:

une autre pluralité de trajets de transmission de lumière selon la revendication 12 disposée de sorte qu'une première extrémité respective de chacun parmi la pluralité de trajets de transmission de lumière se termine au niveau de l'autre plan image, et
un autre dispositif de détection disposé en aval de la pluralité des trajets de transmission de lumière, dans lequel l'autre dispositif de détection est disposé de sorte qu'une seconde extrémité respective de chacun parmi l'autre pluralité des transmission de lumière se termine au niveau de l'autre plan image, dans lequel l'autre dispositif de détection est conçu pour mesurer les intensités respectives de la lumière polarisée filtrée par le filtre passe-bande selon la fréquence d'échantillonnage pour dériver une image 2D de la scène.

16. Spectromètre selon l'une quelconque des revendications 13 à 15, comprenant en outre:
un élément de filtre de ligne spectrale statique conçu pour absorber la lumière qui passe dans la pluralité de trajets de transmission de lumière ayant une direction de polarisation orthogonale à la direction du changement d'indice de réfraction dans les éléments de filtre Fabry-Pérot à cristaux liquides.

100

110    120         130    150

130a

135

Fig.1

110

130a

X

112b

112c

112d

Fig.2

Fig.3

140

V+

142

135

142

144

V-

Fig.4a

135

140a          140b

Fig.4b

Fig.5

Fig.6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013038877 A1
- US 2014354999 A1
- JP S56112635 A
- US 2006221346 A1

**Non-patent literature cited in the description**

- **KAN LIU et al.** Smart Hyperspectral Imaging Detection based on Elekctrically Tunable Liquid-Crystal Fabry-Perot Microstructure Array. *XP055252056*
- **CHRISTENSEN K A et al.** RAMAN IMAGING USING A TUNABLE DUAL-STAGE LIQUID CRYSTAL FABRY-PEROT INTERFEROMETER. *XP000523732*